# DEMANDE DE BREVET EUROPEEN

(11) **EP 4 564 621 A1**
(43) Date de publication de la demande: **04.06.2025**
(21) Numéro de dépôt: 24216366.5
(22) Date de dépôt: 29.11.2024
(51) Int. Cl.: H02B 1/28, H05K 5/02

(54) **ENCEINTE ÉLECTRIQUE À SÉPARATEURS ANTI-FEU**

(30) Priorité: 01.12.2023 FR 2313432
(71) Demandeur: SpeedInnov, 75008 Paris (FR)
(72) Inventeur: GUILLOTEAU, Isabelle, 17440 AYTRE (FR); DE VILLELE, Tanguy, 17000 LA ROCHELLE (FR)
(74) Mandataire: Plasseraud IP

(57) **Abrégé**

Enceinte électrique (12) comprenant :
- des parois (16) définissant un espace interne (18),
- une pluralité de composants (20) électriques et/ou électroniques, disposés dans l'espace interne (18), et
- au moins un séparateur (22) s'étendant en travers de l'espace interne (18) et divisant les composants (20) en au moins deux groupes (24) séparés l'un de l'autre.

Chaque séparateur (22) est choisi dans le groupe constitué de :
- une plaque en acier, présentant une épaisseur comprise entre 0,8 mm et 1,8 mm,
- une plaque en aluminium, présentant une épaisseur comprise entre 1 mm et 2,8 mm, et
- une plaque en matériau composite comprenant des fibres noyées dans une matrice, présentant une épaisseur comprise entre 2 mm et 3 mm.

## Description

La présente invention concerne une enceinte électrique comprenant :
- des parois définissant un espace interne,
- une pluralité de composants électriques et/ou électroniques, disposés dans l'espace interne, et
- au moins un séparateur s'étendant en travers de l'espace interne et divisant les composants en au moins deux groupes séparés l'un de l'autre.

L'invention concerne également un véhicule comprenant une telle enceinte électrique.

Il est usuel de regrouper des composants et des commandes électriques et/ou électroniques d'un véhicule dans une enceinte fermée. Cela permet d'en faciliter l'utilisation grâce à un agencement centralisé, mais aussi de les protéger des conditions extérieures, notamment de température et d'humidité, ainsi que des manipulations inopportunes, voire du vandalisme. Enfin, certains de ces composants présentant potentiellement un risque électrique ou thermique, il convient de les isoler pour prévenir ces risques.

Comme certains desdits composants peuvent subir de fortes élévations de température, il est important d'organiser les composants dans les enceintes de manière à minimiser les risques de propagation de feu en cas de surchauffe, pour éviter un incendie.

Il est notamment connu d'organiser les composants en groupes agencés afin qu'aucun composant à risque ne se situe dans un espace s'étendant au-dessus d'un autre composant à risque, afin d'éviter la propagation d'une surchauffe.

Dans le cas des véhicules ferroviaires par exemple, ledit espace présente une hauteur de 20 cm et une largeur de 2 cm de part et d'autre du composant à risque, fixées par la norme européenne EN45545.

Lorsque l'enceinte électrique contient de nombreux composants pouvant présenter des risques, les espaces de sécurité nécessitent une taille de l'enceinte qui engendre un encombrement important.

Afin de réduire cet encombrement, il est possible de séparer les groupes par des séparateurs plans, résistants au feu, qui permettent de s'affranchir au moins en partie de l'espace de sécurité minimal.

La norme européenne EN45545 donne un critère de test de résistance au feu, et propose comme séparateur pour une enceinte électrique des plaques d'acier de 2 mm d'épaisseur ou des plaques d'aluminium de 3 mm d'épaisseur.

Cependant, ces enceintes électriques peuvent encore être améliorées. En effet, les séparateurs proposés par la norme nécessitent de grandes quantités de matériaux métalliques, et sont donc lourds et coûteux, en plus d'avoir un coût environnemental important.

Un but de l'invention est donc de proposer une enceinte électrique plus légère et moins coûteuse, présentant un impact environnemental réduit, tout en conservant des propriétés de sécurité satisfaisantes.

A cet effet, l'invention a pour objet une enceinte électrique comprenant :
- des parois définissant un espace interne,
- une pluralité de composants électriques et/ou électroniques, disposés dans l'espace interne, et
- au moins un séparateur s'étendant en travers de l'espace interne et divisant les composants en au moins deux groupes séparés l'un de l'autre,
dans laquelle chaque séparateur est choisi dans le groupe constitué de :
- une plaque en acier, présentant une épaisseur comprise entre 0,8 mm et 1,8 mm,
- une plaque en aluminium, présentant une épaisseur comprise entre 1 mm et 2,8 mm, et
- une plaque en matériau composite comprenant des fibres noyées dans une matrice, présentant une épaisseur comprise entre 2 mm et 3 mm.

Une telle enceinte électrique permet d'utiliser moins de matière pour la réalisation des séparateurs, ou des matériaux plus légers, afin de la rendre plus légère et moins coûteuse, ainsi que pour réduire son impact environnemental.

En particulier, les inventeurs ont constaté que l'utilisation des séparateurs définis ci-dessus permet une résistance suffisante au feu.

Selon des modes de réalisation particuliers, l'enceinte électrique selon l'invention présente l'une ou plusieurs des caractéristiques suivantes, prise(s) isolément ou selon toute combinaison techniquement réalisable :
- chaque séparateur est choisi dans le groupe constitué de :
- une plaque en acier, présentant une épaisseur comprise entre 0,8 mm et 1,2 mm,
- une plaque en aluminium, présentant une épaisseur comprise entre 1 mm et 1,5 mm, et
- une plaque en matériau composite comprenant des fibres noyées dans une matrice, présentant une épaisseur comprise entre 2 mm et 2,5 mm ;
- au moins un séparateur comprend un matériau composite comprenant des fibres de verre et une résine phénolique ;
- au moins séparateur est réalisé uniquement à partir de matériaux non métalliques ;
- l'enceinte électrique comprend au moins trois séparateurs divisant les composants en au moins quatre groupes séparés les uns des autres ;
- au moins deux des composants présentent un risque électrique et/ou thermique et sont alignés selon une direction d'élévation, à une distance inférieure à 20 cm l'un de l'autre, les deux composants étant séparés par le ou un des séparateurs ; et
- l'enceinte électrique comprend au moins deux séparateurs s'étendant à une distance inférieure ou égale à 20 cm l'un de l'autre, selon une direction d'élévation.

L'invention a également pour objet un véhicule, notamment ferroviaire, comprenant une enceinte électrique telle que décrite plus haut.

L'invention sera mieux comprise à la lecture de la description qui suit, donnée uniquement à titre d'exemple non-limitatif et faite en référence aux dessins annexés, parmi lesquels :
- [Fig 1] la figure 1 est une vue de côté d'un véhicule selon l'invention, et
- [Fig 2] la figure 2 est une vue en coupe d'une enceinte électrique du véhicule de la figure 1.

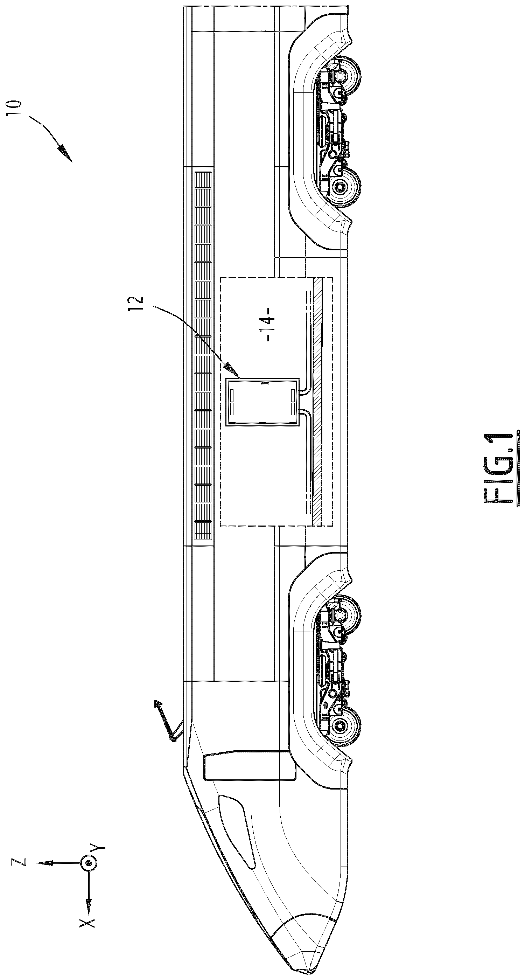

Un véhicule 10 est représenté sur la figure 1. Le véhicule 10 est par exemple un véhicule ferroviaire, notamment un véhicule ferroviaire tirant l'énergie nécessaire à sa propulsion d'une source électrique.

La description qui suit est faite en référence à une direction longitudinale X, une direction transversale Y et une direction d'élévation Z, représentées sur les figures. La direction longitudinale X s'étend selon la direction d'avancée du véhicule 10 en fonctionnement normal. La direction d'élévation Z est orthogonale à la direction longitudinale X et s'étend sensiblement parallèlement à la gravité locale. La direction transversale Y est orthogonale à la direction longitudinale X et à la direction d'élévation Z.

Par les termes « sensiblement parallèle », « sensiblement selon » et « sensiblement perpendiculaire », on entend respectivement « parallèle », « selon » et « perpendiculaire » avec une marge d'erreur angulaire inférieure ou égale à 10°, de préférence inférieure à 5°.

Par le terme « sensiblement égal », on entend « égal » avec une marge d'erreur inférieure ou égale à 10% de la valeur nominale, de préférence inférieure ou égale à 5%.

Le véhicule 10 comprend plusieurs circuits électriques et électroniques participant à des fonctions secondaires, qui comprenant par exemple l'éclairage, la ventilation et la climatisation des compartiments, la communication entre les voitures et avec l'extérieur et la signalisation de la présence du véhicule 10.

Le véhicule 10 comprend au moins une enceinte électrique 12, disposée dans un compartiment interne 14 du véhicule 10.

Sur la figure 1, l'enceinte électrique 12 est représentée dans une voiture de type motrice du véhicule 10.

En variante, l'enceinte électrique 12 peut être située dans une voiture non motrice du véhicule 10, accueillant des passagers.

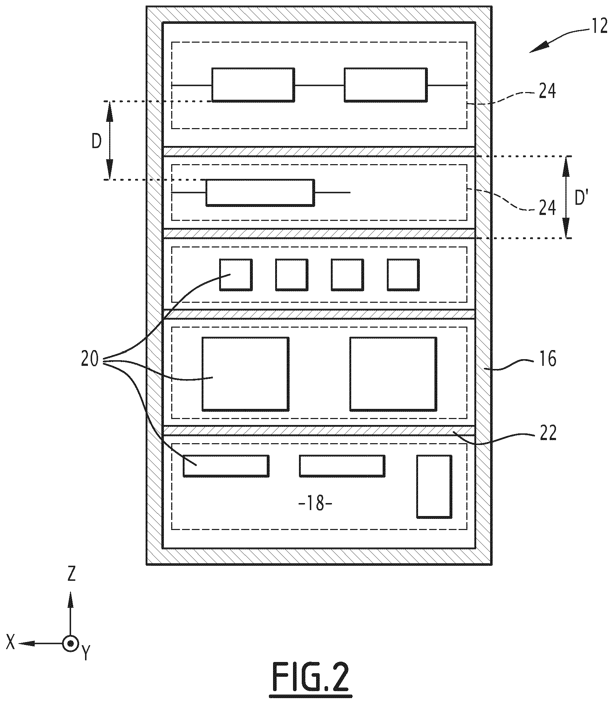

L'enceinte électrique 12 est représentée en détail sur la figure 2.

L'enceinte électrique 12 comprend des parois 16 externes définissant un espace interne 18, une pluralité de composants 20 électriques et/ou électroniques disposés dans l'espace interne 18, ainsi qu'au moins un séparateur 22 s'étendant à travers l'espace interne 18.

Les parois 16 sont des plaques formant un boitier sensiblement parallélépipédique, isolant l'espace interne 18 de l'extérieur.

Les parois 16 sont destinées à protéger les composants 20 disposés dans l'espace interne 18 des variations de température et d'humidité ainsi que des incidents ou du vandalisme. Les parois 16 sont également destinées à isoler les composants 20 contenus dans l'espace interne 18 afin de protéger les passagers et le personnel du véhicule 10 d'un risque électrique et/ou thermique que les composants 20 peuvent représenter.

Les composants électriques 20 sont des éléments faisant partie des circuits secondaires du véhicule 10.

Les composants 20 comprennent, entre autres, des disjoncteurs, des contacteurs, des inverseurs/onduleurs, des diodes, des cartes électroniques et/ou des circuits intégrés.

Certains parmi les composants 20 peuvent présenter un risque de feu et/ou de fumée. On entend par là que ces composants peuvent, en cas d'incident tels qu'une surtension, s'endommager et produire des flammes et/ou de la fumée. Cette émission est accompagnée d'un dégagement important de chaleur, qui risque d'endommager des composants 20 trop proches de cette source de chaleur.

Notamment, en l'absence de séparateur 22 et pour chaque composant 20 à risque, l'armoire électrique 12 doit comprendre un espace minimal de sécurité ne comprenant pas d'autre composant 20, l'espace minimal de sécurité s'étendant sur 2 cm autour du composant 20 à risque selon la direction longitudinale X et la direction transversale Y, ainsi que selon la direction d'élévation Z en-dessous du composant à risque 20, et sur 20 cm selon la direction d'élévation Z au-dessus du composant à risque 20.

Chaque séparateur 22 est une plaque s'étendant en travers de l'espace interne 18, perpendiculairement à la direction d'élévation Z, d'une paroi 16 à l'autre.

Chaque séparateur 22 divise les composants 20 en au moins deux groupes 24 séparés l'un de l'autre par le séparateur 22.

Chaque séparateur 22 empêche la propagation de flamme et de chaleur, de sorte que au moins deux des composants électriques 20 présentant un risque électrique et/ou thermique peuvent être disposés sensiblement alignés selon la direction d'élévation Z à une distance D inférieure à 20 cm l'un de l'autre, les deux composants étant séparés par le séparateur 22.

Chaque groupe 24 comprend au moins un composant 20, notamment une pluralité de composants 20. Au sein d'un même groupe 24, tous les composants 20 à risque respectent les exigences d'espace minimal de sécurité.

L'enceinte électrique 12 comprend par exemple au moins trois séparateurs 22 séparant les composants 20 en au moins quatre groupes 24 séparés les uns des autres.

L'augmentation du nombre de séparateurs 22 et de groupes 24 permet de disposer un plus grand nombre de composants 20 dans l'armoire électrique 12 sans devoir en augmenter les dimensions pour satisfaire aux exigences d'espace minimum de sécurité.

Avantageusement, l'enceinte électrique 12 comprend au moins deux séparateurs 22 s'étendant à une distance D', représentée sur la figure 2, l'un de l'autre. La distance D' est mesurée selon la direction d'élévation Z et inférieure à 20 cm. Cela permet d'augmenter le nombre de séparateurs 22 dans l'enceinte électrique 12 et d'avoir une meilleure flexibilité dans leur disposition.

Dans l'exemple représenté sur les figures, l'enceinte électrique 12 comprend quatre séparateurs 22 séparant les composants 20 en cinq groupes 24.

Chaque séparateur 22 est choisi dans le groupe constitué d'une plaque en acier présentant une épaisseur comprise entre 0,8 mm et 1,8 mm, une plaque en aluminium présentant une épaisseur comprise entre 1 mm et 2,8 mm et une plaque en matériau composite comprenant des fibres noyées dans une matrice de résine, la plaque en matériau composite présentant une épaisseur comprise entre 2 mm et 3 mm.

Les fibres sont par exemple des fibres de verre et la résine est par exemple une résine phénolique.

Chacune des plaques de ce groupe présente une résistance au feu et à la chaleur suffisante pour garantir une non-propagation des flammes entre les composants 20 situés de part et d'autre du séparateur 22.

Les séparateurs 22 présentent une masse et un coût de fabrication réduit par rapport à ceux préconisés par la norme européenne EN45545, ce qui permet d'avoir une enceinte électrique 12 plus facile à installer et manipuler, ainsi moins coûteuse et plus respectueuse de l'environnement grâce à une quantité de matériau réduite.

Selon un mode de réalisation, certains séparateurs 22 sont d'un type différent des autres séparateurs 22. En variante, tous les séparateurs 22 sont identiques.

Avantageusement, chaque séparateur 22 est choisi dans le groupe constitué d'une plaque en acier présentant une épaisseur comprise entre 0,8 mm et 1,2 mm, une plaque en aluminium présentant une épaisseur comprise entre 1 mm et 1,5 mm et une plaque en matériau composite comprenant des fibres noyées dans une matrice, la plaque présentant une épaisseur comprise entre 2 mm et 2,5 mm.

Les épaisseurs réduites des plaques de ce deuxième groupe permettent de réduire encore la masse et le coût de fabrication des séparateurs 22, et donc de l'armoire électrique 12.

Avantageusement, au moins un des séparateurs 22 est réalisé uniquement à partir de matériaux non métalliques. Cela permet d'éviter la formation d'un courant de fuite à travers le séparateur 22 pouvant perturber les composants 20, ou une mauvaise mise à la masse d'un séparateur 22 métallique qui engendrerait des perturbations électromagnétiques.

L'enceinte électrique 12 selon l'invention emploie des séparateurs 22 présentant des épaisseurs suffisantes pour séparer efficacement les composants 20 en groupes de manière à prévenir les risques de feux et fumées, tout en présentant des épaisseurs réduites afin de réduire leur coût de fabrication et leur impact sur l'environnement.

## Revendications

1. Enceinte électrique (12) comprenant :
- des parois (16) définissant un espace interne (18),
- une pluralité de composants (20) électriques et/ou électroniques, disposés dans l'espace interne (18), et
- au moins un séparateur (22) s'étendant en travers de l'espace interne (18) et divisant les composants (20) en au moins deux groupes (24) séparés l'un de l'autre, **caractérisée en ce que** chaque séparateur (22) est choisi dans le groupe constitué de :
- une plaque en acier, présentant une épaisseur comprise entre 0,8 mm et 1,8 mm,
- une plaque en aluminium, présentant une épaisseur comprise entre 1 mm et 2,8 mm, et
- une plaque en matériau composite comprenant des fibres noyées dans une matrice, présentant une épaisseur comprise entre 2 mm et 3 mm.

2. Enceinte électrique (12) selon la revendication 1, dans laquelle chaque séparateur (22) est choisi dans le groupe constitué de :
- une plaque en acier, présentant une épaisseur comprise entre 0,8 mm et 1,2 mm,
- une plaque en aluminium, présentant une épaisseur comprise entre 1 mm et 1,5 mm, et
- une plaque en matériau composite comprenant des fibres noyées dans une matrice, présentant une épaisseur comprise entre 2 mm et 2,5 mm.

3. Enceinte électrique (12) selon la revendication 1 ou 2, dans laquelle au moins un séparateur (22) comprend un matériau composite comprenant des fibres de verre et une résine phénolique.

4. Enceinte électrique (12) selon l'une quelconque des revendications 1 à 3, dans laquelle au moins séparateur (22) est réalisé uniquement à partir de matériaux non métalliques.

5. Enceinte électrique (12) selon l'une quelconque des revendications 1 à 4, dans laquelle l'enceinte électrique (12) comprend au moins trois séparateurs (22) divisant les composants (20) en au moins quatre groupes (24) séparés les uns des autres.

6. Enceinte électrique (12) selon l'une quelconque des revendications 1 à 5, dans laquelle au moins deux des composants (20) présentent un risque électrique et/ou thermique et sont alignés selon une direction d'élévation (Z), à une distance (D) inférieure à 20 cm l'un de l'autre, les deux composants (20) étant séparés par le ou un des séparateurs (22).

7. Enceinte électrique (12) selon l'une quelconque des revendications 1 à 6, dans laquelle l'enceinte électrique (12) comprend au moins deux séparateurs (22) s'étendant à une distance (D') inférieure ou égale à 20 cm l'un de l'autre, selon une direction d'élévation (Z).

8. Véhicule (10), notamment ferroviaire, comprenant une enceinte électrique (12) selon l'une quelconque des revendications 1 à 7.
